# EUROPÄISCHE PATENTSCHRIFT

(11) **EP 0 650 988 B1**
(45) Veröffentlichungstag und Bekanntmachung des Hinweises auf die Patenterteilung: **21.05.1997**
(21) Anmeldenummer: 94113597.2
(22) Anmeldetag: 31.08.1994
(51) Int. Cl.: C08G 18/10

(54) **Kalthärtende, lösungsmittelarme oder lösungsmittelfreie 2K-Polyurethan-Polyharnstoff-Massen**
Cold curing, poorinsolvent or solventless 2-components polyurethane-urea composition
Masses à deux composants de polyuréthane-urée durcissantes à froid, exemptes de solvant ou pauvres en solvant

(30) Priorität: 30.10.1993 DE 4337236
(43) Veröffentlichungstag der Anmeldung: 03.05.1995
(73) Patentinhaber: HÜLS AKTIENGESELLSCHAFT, 45764 Marl (DE)
(72) Erfinder: Gras, Rainer, Dr., D-44879 Bochum (DE); Schmitt, Felix, Dr., D-45701 Herten (DE); Wolf, Elmar, Dr., D-45661 Recklinghausen (DE)

(56) Entgegenhaltungen:
- EP-A- 0 322 089
- EP-A- 0 420 426

## Beschreibung

Die vorliegende Erfindung betrifft lichtbeständige, kalthärtende, lösemittelarme bzw. -freie Zweikomponenten-Polyurethan-Polyharnstoff-Massen (PUR/PH-Massen), bestehend aus disekundären Diaminen und (cyclo)-aliphatischen NCO-Präpolmeren für Beschichtungen, Dichtungs- und Vergußmassen sowie Reaktionslacken und Klebstoffen.

Es ist bekannt, daß im allgemeinen (cyclo)-aliphatische Polyamine mit Polyisocyanaten so schnell reagieren, daß sie nicht verarbeitbar sind. Weiterhin ist bekannt, daß durch Einführung von Harnstoffsegmenten die Eigenschaften von PUR-Elastomeren, wie z. B. Zugfestigkeit, Weiterreißfestigkeit und Abriebsfestigkeit, erheblich verbessert werden.

Aufgabe der vorliegenden Erfindung ist somit das Auffinden von geeigneten (cyclo)-aliphatischen Diaminen, die mit Polyisocyanaten bei Raumtemperatur zu PUR-Polyharnstoffmassen verarbeitbar sind.

Diese Aufgabe konnte dadurch gelöst werden, daß für die mit Polyisocyanaten umzusetzenden Diamine solche auf Basis (cyclo)-aliphatischer, sterisch gehinderter disekundärer Diamine verwendet werden.

Gegenstand der Erfindung sind daher reaktive, lichtbeständige 2K-Polyurethanpolyharnstoffmassen, die bei Raumtemperatur härten, bestehend aus:
a) einem Diamin der allgemeinen Formel 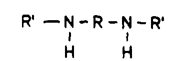 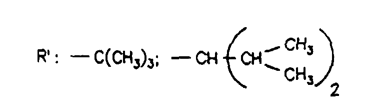 wobei R: gegebenenfalls alkyl-substituierter (Cylo)-Alkylenrest mit 2 - 16 C-Atomen, in dem gegebenenfalls 1 - 3 CH₂-Gruppen durch -O- bzw. 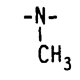 -Gruppen ersetzt sein können,
   R' Diisopropylmethyl und t-Butyl bedeuten, und
b) NCO-Präpolymeren mit (cyclo)-aliphatischen NCO-Gruppen und einer NCO-Funktionalität ≥ 2,
wobei die Reaktionspartner im NCO : NH-Äquivalenzverhältnis von (1,5 - 1) : 1 umgesetzt werden.

Die PUR/PH-Massen können auch Weichmacher enthalten.

Als NCO-Präpolymere für die erfindungsgemäßen PUR/PH-Massen sind Reaktionsprodukte aus verzweigten Polyether- und/oder Polyesterpolyolen, die gegebenenfalls auch lineare Polyether- und/oder Polyesterpolyole enthalten können, und (cyclo)-aliphatische Diisocyanaten geeignet, wobei das OH/NCO-Äquivalentverhältnis 1 : (1,5 - 2) sein kann. Als lineare oder verzweigte Polyetherpolyole kommen die Polyalkylenpolyetherpolyole mit einem mittleren Molekulargewicht von 200 - 7000 in Frage, wie sie durch Copolymerisation, Blockpolymerisation oder anionische Polymerisation von Alkylenoxiden, wie insbesondere Ethylen- und/oder Propylenoxid mit di- und höherfunktionellen Alkoholen, wie Ethylenglykol, Propandiol-1.3, Trimethylolpropan oder Aminen, wie Ethylendiamin oder Hexamethylendiamin als Startkomponenten oder kationischer Polymerisation und Copolymerisation cyclischer Ether, wie Tetrahydrofuran, Ethylen- und Propylenoxid mit sauren Katalysatoren erhalten werden.

Ferner eignen sich zur Herstellung der erfindungsgemäßen PUR/PH-Massen auch Polyhydroxypolyester. Sie stellen Umsetzungsprodukte von mehrwertigen Alkoholen mit mehrwertigen Carbonsäuren dar. Statt der freien Polycarbonsäuren können auch die entsprechenden Anhydride oder Carbonsäureester von niederen Alkoholen oder deren Gemische verwendet werden. Die Polycarbonsäuren können aliphatischer, cycloaliphatischer, aromatischer und/oder heterocyclischer Natur sein. Beispiele geeigneter Polycarbonsäuren bzw. Polycarbonsäurederivaten sind: Bernstein-, Adipin-, Sebacin-, Phthal- und Isophthalsäure, Hexahydro- und Tetrahydrophthalsäure sowie Terephthalsäuredimethylester.

Als mehrwertige Alkohole für die Herstellung der Polyhydroxypolyester kommen z.B. Ethylenglykol, Propylenglykol-(1.2) und -(1.3), Butandiol-1.4, Hexandiol-1.6, Octandiol-1.8, Neopentylglykol, 2.2.4(2.4.4)-Trimethylhexandiol-1.6, Cyclohexandimethanol-1.4, 2-Methyl-pentandiol-1.5, Glyzerin, Trimethylolpropan, Trimethylolethan, Hexantriol-1.2.6, Diethylenglykol und Dibutylenglykol in Frage. Als Rohstoffkomponenten zur Polyesterherstellung können auch Lactone, z. B. ε-Caprolacton oder Hydroxycarbonsäuren, z. B. Hydroxycapronsäure, dienen. Geeignete OH-Komponenten für die in den erfindungsgemäßen PUR/PH-Massen einzusetzenden NCO-Präpolymeren können natürlich auch Polycaprolactone mit einer OH-Funktionalität ≥ 2 sein.

Als geeignete (cyclo)-aliphatische Diisocyanate zur Herstellung der NCO-Präpolymeren seinen genannt: Hexamethylendiisocyanat-1.6 (HDI), 2-Methylpentamethylendiisocyanat-1.5, 2.2.4 (2.4.4)-Trimethyl-hexamethylendiisocyanat-1.6 (TMDI), Isophorondiisocyanat (IPDI), Methylen-bis-(4-cyclohexylisocyanat), Tetramethyl-xylylendiisocyanat, 1.4-Bis-(isocyanatomethyl)-cyclohexan.

Die Herstellung der NCO-Präpolymeren in Substanz oder Weichmachern, wie z. B. Benzylbutylphthalat, Phosphorsäureestern, Chlorparaffinen, erfolgt in bekannter Weise, das heißt, daß zu dem auf 80 °C erhitzten Diisocyanat gegebenenfalls im Gemisch mit dem Weichmacher die Polyolkomponente so zudosiert wird, daß die Temperatur des Reaktionsgemisches 90 °C nicht übersteigt. Nach erfolgter Polyolzugabe wird so lange bei 80 °C weiter erhitzt, bis die OH/NCO-Reaktion quantitativ erfolgt ist. Die so hergestellten NCO-Präpolymeren enthalten je nach Molgewicht der OH-Komponente 2 - 7 % monomeres Diisocyanat und besitzen einen NCO-Gehalt von 2 - 10 %. In manchen Fällen hat es sich als zweckmäßig erwiesen, das NCO-Präpolymer in zwei Stufen herzustellen, wobei in der 1. Stufe 5 - 10 mol Diisocyanat mit 1 mol Polyol bei ca. 80 °C umgesetzt werden, und in der 2. Stufe man das nicht umgesetzte Diisocyanat durch Dünnschichtdestillation bei 150 - 180 °C/ 0,1 Torr vom Reaktionsprodukt entfernt. Die so hergestellten NCO-Präpolymeren zeichnen sich durch einen extrem niedrigen Monomergehalt von ≤ 0,3 % aus.

Geeignet im Sinne der Erfindung zur Herstellung der PUR/PH-Massen sind selbstverständlich auch die trimeren Formen der Diisocyanate, wie Isocyanurate oder Biurete, die nach bekannten Methoden herstellbar sind.

Die für die erfindungsgemäßen PUR/PH-Massen geeigneten Diamine enthalten 2 sekundäre, sterisch gehinderte Aminogruppen und werden nach bekannten Verfahren in zwei Stufen hergestellt, wobei in der 1. Stufe, wenn R' Diisopropylmethyl ist, das Diamin mit Diisopropylketon zur Schiffschen Base umgesetzt wird, und in der 2. Stufe die Hydrierung zum N.N'-Bis-[diisopropylmethyl]-diamin erfolgt; wenn R' tert. Butyl ist, wird zur Bildung der Schiffschen Base in der Regel tert.-Butylamin und ein Dialdehyd, in der Regel Glyoxal, eingesetzt.

Bei den für Umsetzung mit Diisopropylketon einsetzbaren Diaminen handelt es sich um folgende Verbindungen: Ethylendiamin, Propylendiamin, Butylendiamin, 2.2.4(2.4.4)-Trimethylhexamethylendiamin-1.6 (TMD), 2-Methyl-pentamethylendiamin-1.5, 1.4-Diaminocyclohexan, 1.4-Bis-(aminomethyl)-cyclohexan, Isophorondiamin (IPD), Methylen-bis-(4-cyclohexylamin) und 3.3'-Dimethyl-4.4'-diaminodicyclohexylmethan. Als Reaktionskomponente für t-Butylamin kommen Dialdehyde, wie z. B. Glyoxal, Malondialdehyd, Succindialdehyd, Glutardialdehyd und Terephthaldialdehyd in Frage.

Zur Herstellung der erfindungsgemäßen 2K-PUR/PH-Massen werden die Komponenten - das NCO-Präpolymer und das sterisch gehinderte di-sekundäre Diamin (DA), wobei es in manchen Fällen sich als vorteilhaft erwiesen hat, Gemische der t-Butyl- und Diisopropylmethyl-substituierten Diamine einzusetzen, - gegebenenfalls in inerten Lösungsmitteln wie Toluol, Xylol, Methoxypropylacetat oder Weichmachern, wie z. B. Dicarbonsäureester, Benzylbutylphthalat, Phosphorsäureester, z. B. Tri- octylphosphat, Trikresylphosphat, Sulfonsäureester oder Chlorparaffine, im NCO : NH-Verhältnis von (1,5 - 1) : 1, vorzugsweise (1,2 - 1) : 1, gemischt und nach einer Reifezeit von ca. 5 min appliziert. Die erfindungsgemäßen 2K-PUR/PH-Massen eignen sich zur Herstellung von Beschichtungen, Dichtungs- und Vergußmassen sowie zu 2K-Lacken (Reaktionslacke) und Klebstoffen. Die für die jeweiligen Anwendungen erforderlichen Hilfs- und Zusatzstoffe wie Füllstoffe, Pigmente, Katalysatoren oder Entschäumer können beigemischt werden. Als Untergrund für die erfindungsgemäßen PUR/PH-Massen kommen beliebige Substrate in Frage, wie Beton, Metall, Holz, Glas, Keramik, Stein sowie Kunststoffe. Die Applikation erfolgt in bekannter Weise durch Rakeln, Gießen, Spritzen, Rollen.

Die nachstehenden Beispiele demonstrieren die erfindungsgemäßen PUR/PH-Massen.

### Experimenteller Teil

A.1 Herstellung der Aminkomponente (A 1)
   Die Herstellung erfolgt in zwei Stufen, wobei in der 1. Stufe Ethylendiamin und Diisopropylketon im Molverhältnis 1 : 2 ca. 24 h in Gegenwart von 1 Gew.-% eines sauren Ionenaustauschers erhitzt wird. Anschließend wird die wäßrige Phase von der organischen abgetrennt. Zur Abtrennung des Restwassers wird die organische Phase so lange bei 100 °C und 0,1 mbar erhitzt, bis kein Wasser mehr übergeht.
   In der 2. Stufe erfolgt die Hydrierung der Schiffschen Base an einem Co-Kontakt bei 130 °C und 300 bar.
   Das Rohprodukt wird bei 140 °C/0,1 mbar destilliert.
   Das so hergestellte Reaktionsprodukt - 1.1.6.6 -Tetraisopropyl-2.5-diazahexan (A 1) - hat einen basischen Amingehalt von 7.8 mmol NH₂/g.
A.2 Herstellung der Aminkomponente A 2
   Die Herstellung von A 2 erfolgt analog zu der Herstellung von A.1 in 2 Stufen, wobei in der 1. Stufe Glyoxal und t-Butylamin im Molverhältnis 1 : 2 umgesetzt werden und die entstandene Schiffsche Base anschließend unter den bei A.1 angegebenen Reaktionsbedingungen hydriert wird.
   Das so hergestellte Reaktionsgemisch hat einen basischen Amingehalt von 11,5 mmol NH₂/g.

### B. Herstellung der NCO-Präpolymeren

I. Die für das erfindungsgemäße Verfahren eingesetzten NCO-Präpolymeren wurden in der Regel so hergestellt, daß die OH-Komponente (ein OH-Gruppen enthaltender Polyester oder Polyether) mit dem Diisocyanat, meistens IPDI, im OH : NCO-Äquivalenzverhältnis von 1 : 2 gemischt wurde und mit 0,05 Gew.-% DBTL bei 80 °C so lange erhitzt wurde, bis der theoretische NCO-Gehalte des Reaktionsproduktes erreicht war.
II. In machen Fällen hat es sich als zweckmäßig erwiesen, so vorzugehen, daß das Diisocyanat mit dem Polyol im NCO : OH-Verhältnis von (10 - 20) : 1 umgesetzt wird, und in einer 2. Stufe dann das nicht umgesetzte Diisocyanat durch Dünnschichtdestillation vom Reaktionsprodukt entfernt wird.

### Beispiel 1:

2 220 Gew.-T. IPDI wurden mit 3360 Gew.-T. des Polyethertriol Voranol CP 3322 und 0,55 Gew.-T. DBTL 60 min bei 80 °C erhitzt. Während dieser Zeit fiel der NCO-Gehalt auf 12,6 %. Das nicht umgesetzte IPDI wurde bei 180 °C/ 0,1 Torr vom Reaktionsprodukt abgetrennt. Der NCO-Gehalt des Reaktionsproduktes betrug 2,6 %.

### Beispiel 2:

IPDI wurde mit einem OH-Gruppen enthaltenden Polyester aus 1 mol Trimethylolpropan, 6 mol Hexandiol, 1 mol Adipinsäure, 5 mol Phthalsäureanhydrid, mit einer OH-Zahl von 105 mg KOH/g entsprechend Verfahren I umgesetzt. Das so hergestellte NCO-Präpolymer hatte einen NCO-Gehalt von 5 %.

### Beispiel 3:

IPDI wurde mit einem OH-Gruppen enthaltenden Polyester aus 2 mol Trimethylolpropan, 6 mol Hexandiol, 3 mol Adipinsäure, 3 mol Phthalsäureanhydrid, mit einer OH-Zahl von 195 mg KOH/g entsprechend Verfahren I umgesetzt. Das so hergestellte NCO-Präpolymer hatte einen NCO-Gehalt von 7,4 %.

### Beispiel 4:

IPDI wurde mit einem OH-Gruppen enthaltenden Polyester aus 2 mol Trimethylolpropan, 5 mol Hexandiol, 2 mol Adipinsäure, 3 mol Phthalsäureanhydrid, mit einer OH-Zahl von 207 mg KOH/g entsprechend Verfahren I umgesetzt. Das so hergestellte NCO-Präpolymer hatte einen NCO-Gehalt von 7,8 %.

### Beispiel 5:

IPDI wurde mit dem Polyethertriol Voranol CP 3001 (OH-Zahl 57 mg KOH/g) entsprechend Verfahren I umgesetzt. Das Reaktionsprodukt hatte einen NCO-Gehalt von 3,2 %.

### Beispiel 6:

IPDI wurde mit dem Polytetrahydrofurandiol Teracol 1000 (Molgewicht: ca. 1000) entsprechend Verfahren I umgesetzt. Das Reaktionsprodukt hatte einen NCO-Gehalt von 5,5 %.

### Beispiel 7:

IPDI wurde mit dem Polytetrahydrofurandiol Teracol 650 (Molgewicht: ca. 650) entsprechend Verfahren I umgesetzt. Das Reaktionsprodukt hatte einen NCO-Gehalt von 7,5 %.

### Beispiel 8:

IPDI wurde mit dem Polypropylenglykol Voranol P 1010 (Molgewicht: ca. 1000) entsprechend Verfahren I umgesetzt. Das Reaktionsprodukt hatte einen NCO-Gehalt von 5,7 %.

### C. Herstellung von Klarlacken mit den erfindungsgemäßen PUR/PH-Massen

Die Aminkomponente A 1 wird mit dem NCO-Präpolymeren im NH : NCO-Äquivalenzverhältnis gemischt und nach einer Reifezeit von ca. 5 min auf entfettete Stahlbleche aufgetragen und bei Raumtemperatur (7 Tage) gehärtet.

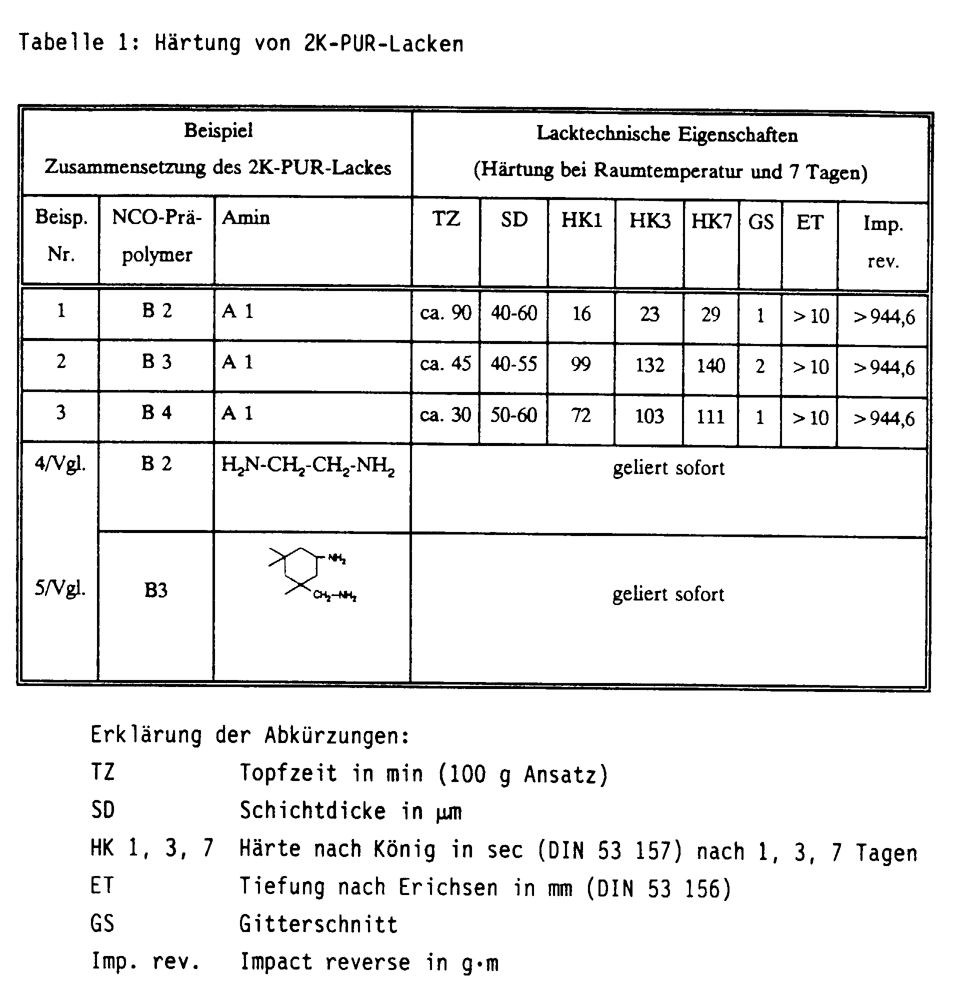

### D. Herstellung der erfindungsgemäßen 2 K-PUR-Dickschichtsysteme

Allgemeine Herstellung der Prüfkörper

Das IPDI-Präpolymer wird mit der äquivalenten Mengen des sterisch gehinderten Amins und gegebenenfalls 0,05 - 0,1 Gew.-% Entschäumer, 0,1 - 0,3 Gew.-% Oxidationsstabilisator, 0,05 - 0,1 Gew.-% Katalysator homogenisiert und anschließend, falls erforderlich, weitgehend bis zur Blasenfreiheit entgast. Die Gießmasse wird in Formen gegossen und bei Raumtemperatur gehärtet.

Die in der nachfolgenden Tabelle aufgeführten Prüfdaten wurden nach 14 Tagen Härtung bei Raumtemperatur ermittelt.

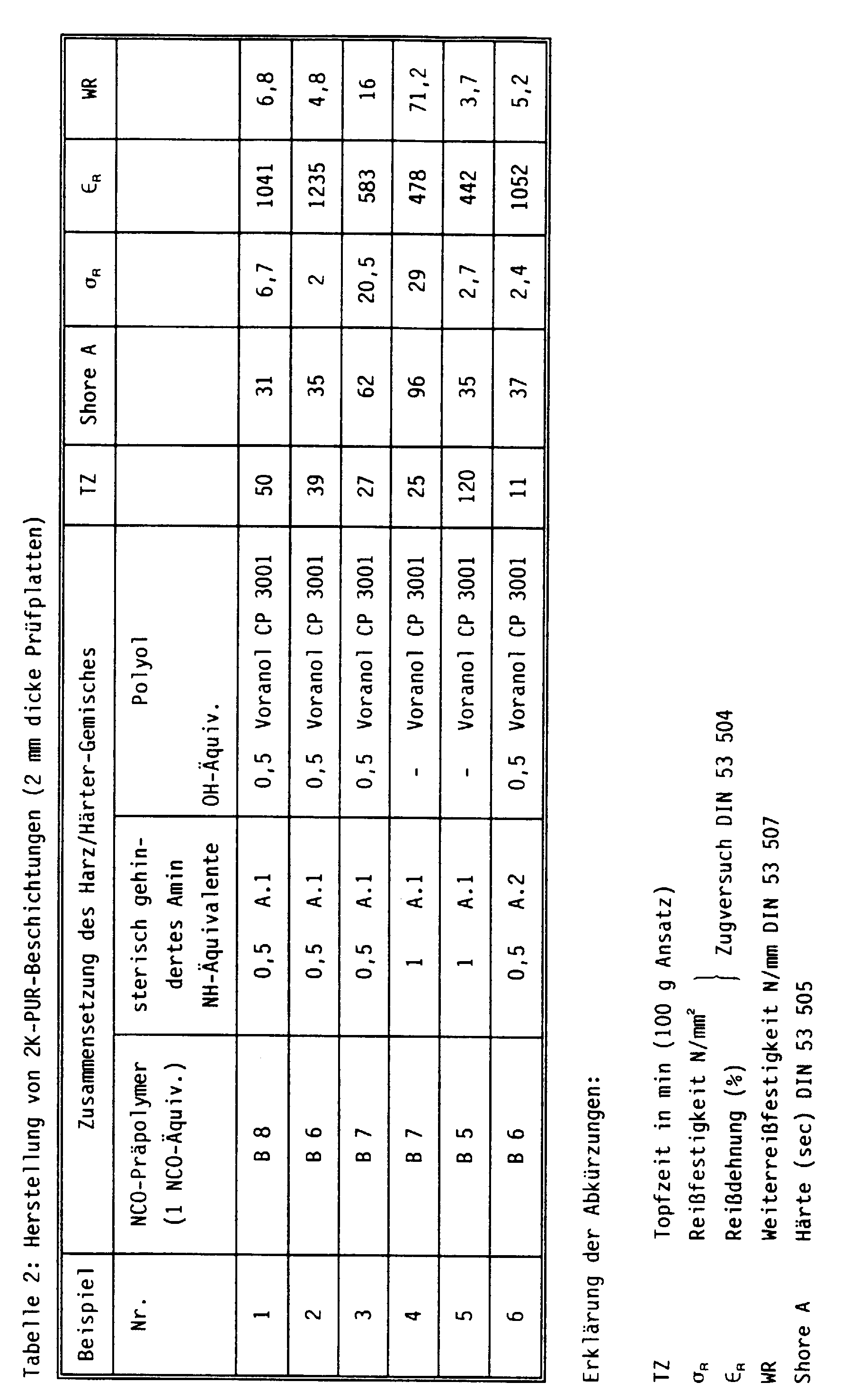

## Patentansprüche

1. Kalthärtende, lösungsmittelarme oder lösungsmittelfreie 2K-Polyurethan-Polyharnstoff-Massen bestehend aus:
a) einem Diamin der folgenden Zusammensetzung 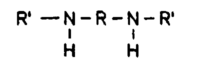 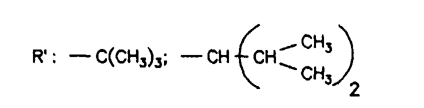 wobei R: gegebenenfalls alkyl-substituierter (Cyclo-)Alkylenrest mit 2 - 16 C-Atomen, in dem gegebenenfalls 1 - 3 CH₂-Gruppen durch -O- bzw. 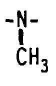 -Gruppen ersetzt sein können, bedeutet und
b) NCO-Präpolymeren mit (cyclo)-aliphatischen NCO-Gruppen mit einer NCO-Funktionalität ≥ 2
c) gegebenenfalls Weichmachern
wobei die Reaktionspartner im NCO : NH-Äquivalentverhältnis von (1,5 - 1) : 1 umgesetzt werden.

2. 2K-Polyurethan-Polyharnstoff-Massen nach Anspruch 1,
dadurch gekennzeichnet,
daß sie Zusätze an Weichmachern enthalten.

3. Polyurethan-Polyharnstoff-Massen nach den Ansprüchen 1 und 2,
dadurch gekennzeichnet,
daß das NCO-Präpolymer ein Reaktionsprodukt aus Isophorondiisocyanat und einem Polyesterpolyol mit einer OH-Funktionalität ≥ 2 und einer OH-Zahl von 30 200 mg KOH/g ist, und wobei IPDI und das Polyesterpolyol im NCO : OH-Äquivalenzverhältnis von 2 : 1 umgesetzt werden.

4. Polyurethan-Polyharnstoff-Massen nach den Ansprüchen 1 und 2,
dadurch gekennzeichnet,
daß das NCO-Präpolymer ein Reaktionsprodukt aus Isophorondiisocyanat und einem Polyetherpolyol mit einer OH-Funktionalität ≥ 2 und einer OH-Zahl von 30 - 200 mg KOH/g ist, und wobei IPDI und das Polyetherpolyol im NCO : OH-Äquivalenzverhältnis von 2 : 1 umgesetzt werden.

5. Verwendung der Polyurethan-Polyharnstoff-Massen nach den Ansprüchen 1 bis 4 für Beschichtungen.

6. Verwendung der Polyurethan-Polyharnstoff-Massen nach den Ansprüchen 1 bis 4 für Reaktionslacke.

## Claims

1. A cold-curing, low-solvent or solvent-free 2-component polyurethane/polyurea composition comprising:
a) a diamine of the following composition 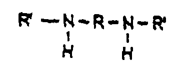 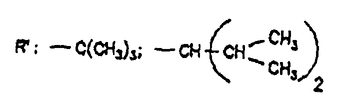 where R is an optionally alkyl-substituted (cyclo)alkylene radical having 2-16 carbon atoms in which 1-3 CH₂ groups may optionally be replaced by -O- or 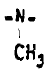 groups, and
b) NCO prepolymers having (cyclo)aliphatic NCO groups having an NCO functionality ≥ 2,
c) if desired, plasticizers,
the reactants being reacted in an NCO:NH equivalents ratio of (1.5-1):1.

2. A 2-component polyurethane/polyurea composition according to claim 1, characterized in that it comprises added plasticizers.

3. A polyurethane/polyurea composition according to either of claims 1 and 2, characterized in that the NCO prepolymer is a reaction product of isophorone diisocyanate with a polyesterpolyol having an OH functionality ≥ 2 and an OH number of 30-200 mg of KOH/g, and where IPDI and the polyesterpolyol are reacted in an NCO:OH equivalents ratio of 2:1.

4. A polyurethane/polyurea composition according to either of claims 1 and 2, characterized in that the NCO prepolymer is a reaction product of isophorone diisocyanate with a polyetherpolyol having an OH functionality ≥ 2 and an OH number of 30-200 mg of KOH/g, and where IPDI and the polyetherpolyol are reacted in an NCO:OH equivalents ratio of 2:1.

5. Use of the polyurethane/polyurea composition according to any of claims 1 to 4 for coatings.

6. Use of the polyurethane/polyurea composition according to any of claims 1 to 4 for reactive coating materials.

## Revendications

1. Produits polyuréthanne polyurée - 2K durcissant à froid, pauvres en solvant ou dépourvus de solvant qui consistent en :
a) une diamine de composition suivante : 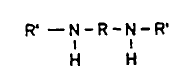 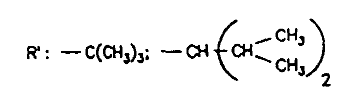 dans laquelle R un radical(cyclo)alkylène éventuellement substitué par un alkyle, ayant de 2 à 16 atomes de carbone, dans lequel éventuellement 1 à 3 groupes -CH2- peuvent être remplacés par des groupes
-O- ou 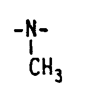 et,
b) des prépolymères -NCO- avec des groupes NCO (cyclo)aliphatiques ayant une fonctionnalité de NCO ≥ 2,
c) éventuellement des plastifiants
dans lesquels les partenaires de réaction sont mis en réaction dans le rapport en équivalents NCO : NH de 1,5-1 : 1.

2. Produits polyuréthanne polyurée 2K selon la revendication 1,
caractérisés en ce qu'
ils renferment des additifs en, agents plastifiants.

3. Produits polyuréthanne polyurée selon les revendications 1 et 2,
caractérisés en ce que
le prépolymère en NCO est un produit de réaction à partir de l'isophorone diisocyanate et d'un polyester de polyol ayant une fonctionnalité en OH ≥ 2 et un indice d'OH de 30 - 200 mg KOH/g et pour lequel IPDI et le polyester de polyol sont mis à réagir dans un rapport en équivalents NCO/OH de 2 : 1.

4. Produit polyuréthanne polyurée selon les revendications 1 et 2,
caractérisé en ce que
le prépolymère en NCO est un produit de réaction à partir de l'isophorone diisocyanate et d'un polyéther de polyol ayant une fonctionnalité en OH ≥ 2 et un indice d'OH de 30-200 mg KOH/g et pour lequel IPDI et le polyéther de polyol sont mis à réagir dans le rapport en équivalents NCO : OH de 2 : 1.

5. Utilisation des produits polyuréthanne polyurée selon les revendications 1 à 4 pour des enductions.

6. Utilisation des produits polyuréthanne polyurée selon les revendications 1 à 4 pour des laques de réaction.
